# EUROPEAN PATENT APPLICATION

(11) **EP 2 264 936 A2**
(43) Date of publication of application: **22.12.2010**
(21) Application number: 10006306.4
(22) Date of filing: 17.06.2010
(51) Int. Cl.: H04L 1/18, H04W 74/08

(54) **Method for avoiding false random access procedure completion in a wireless communication system**

(30) Priority: 17.06.2009 US 218065
(71) Applicant: HTC Corporation, Taoyuan County 330 (TW)
(72) Inventor: Hsu, Chia-Chun, Taoyuan City Taoyuan County 330 (TW)
(74) Representative: Carstens, Dirk Wilhelm

(57) **Abstract**

A method for avoiding false random access procedure completion for a user equipment in a connected mode of a wireless communication system includes when a random access response is received and the random access response includes an uplink grant, selecting a HARQ process for a scheduled message and transmitting the scheduled message (402), after the scheduled message is transmitted, when an uplink grant associated with the HARQ process is received on a PDCCH addressed to a C-RNTI and a new data indicator received on the PDCCH indicates that the uplink grant addressed to the C-RNTI is for a new transmission, verifying whether a transport block size and a modulation and coding scheme with the uplink grant addressed to the C-RNTI are valid (404), and when the transport block size or the modulation and coding scheme is invalid, ignoring the uplink grant and continuing the random access procedure (406).

## Description

The present invention relates to a method for avoiding false random access procedure completion in a wireless communication system and related communication device.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs). The LTE radio protocol stack includes the Layer 3, also known as the Radio Resource Control (RRC) layer, the Layer 2, consisting of three sub-layers that are the Packet Data Convergence Protocol (PDCP) layer, the Radio Link Control (RLC) layer, and the Medium Access Control (MAC) layer, and the Layer 1, also known as the Physical (PHY) layer.

A scheduling request (SR) is used for requesting uplink (UL) resources when the UE has no UL-SCH resource available for a new transmission in a current transmission time interval (TTI).In this TTI, if the UE has no valid physical uplink control channel (PUCCH) resource for the SR, the UE MAC layer initiates a random access procedure and signals a random access SR on a random access channel (RACH). Otherwise, if the UE has a valid PUCCH resource for the SR, the UE MAC layer instructs the UE PHY layer to signal a dedicated SR on the PUCCH resource, and increments an SR counter by 1. The UE also initiates the random access procedure when the SR counter reaches a maximum value.

A buffer status report (BSR) is a MAC control element, and is used for providing a serving eNB with information about the amount of data available for transmission in a UE UL transmission buffer. The BSR is triggered when UL data belonging to a logical channel with higher priority than those for which data already existed in the UL transmission buffer arrives at the UL transmission buffer. BSRs are referred to three types, including regular BSR, periodic BSR and padding BSR by different triggering events. When a regular BSR is triggered and the UE has no UL-SCH resource allocated for the current TTI, an SR is triggered. A retransmission BSR timer is started when the regular BSR is triggered or a new UL grant is allocated, which is used for handling the situation that the BSR has been transmitted but the eNB does not respond with any UL resource for a long time. When the retransmission BSR timer expires, an enforced SR is triggered, so that data in the UL transmission buffer has an opportunity to be transmitted.

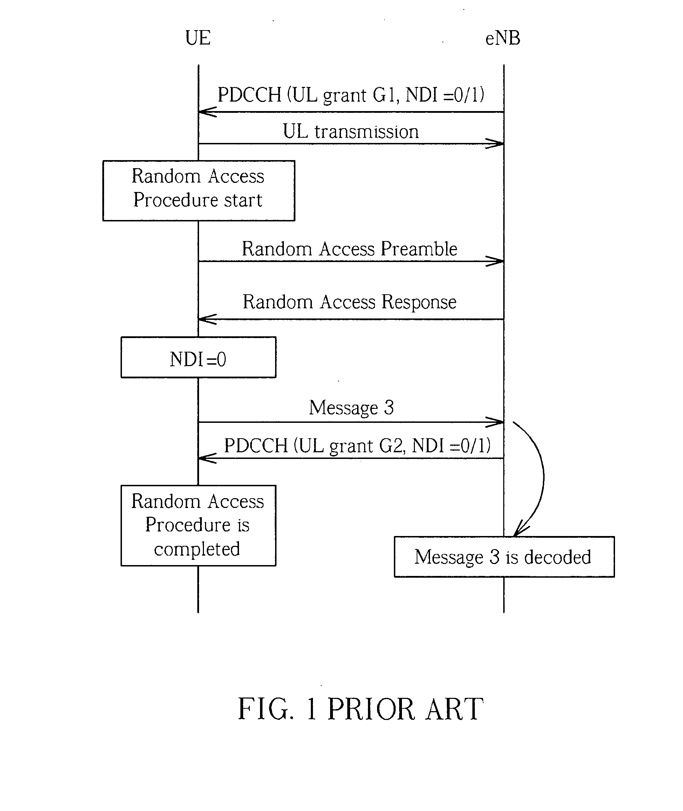

A random access procedure is initiated by the UE MAC layer for different events, including initial access from the RRC idle mode, RRC connection re-establishment procedure, handover, downlink (DL) data arrival during the RRC connected mode requiring the random access procedure, or UL data arrival during the RRC connected mode requiring the random access procedure, e.g. when there is no available PUCCH resource for SR. Please refer to FIG. 1, which is a diagram illustrating a contention-based random access procedure according to the prior art. As shown in FIG. 1, the random access procedure consists of four steps: (1) a random access preamble, from the UE to the eNB; (2) a random access response, from the eNB to the UE; (3) a scheduled UL transmission, called message 3, such as RRC connection request, tracking area update, or scheduling request, from the UE to the eNB; and (4) a contention resolution message, from the eNB to the UE.

At the beginning of the random access procedure, the UE MAC layer selects a random access preamble and a PRACH resource, and instructs the UE PHY layer to transmit the random access preamble by the selected PRACH resource. Once the random access preamble is transmitted, the UE monitors the physical downlink control channel (PDCCH) for a random access response identified by a RA-RNTI within a predetermined window. The random access response consists of reserved bit, timing advance command, UL grant, and temporary cell-RNTI. The UE MAC layer may stop monitoring the PDCCH for the random access response after a random access response containing a random access identifier that matches the transmitted random access preamble is successfully received.

After the random access response is successfully received, the UE MAC layer transmits a message 3, which is the first scheduled message including a cell radio network temporary identifier (C-RNTI) or common control channel (CCCH) service data unit (SDU) and the BSR. The message 3 is transmitted according to the UL grant providing in the random access response. The eNB knows the status of the UL transmission buffer of the UE after the message 3 including the BSR is received and assigns an UL grant to the UE to transmit data available in the UL transmission buffer. Transmission of the message 3 uses a hybrid automatic repeat request (HARQ) procedure. After the message 3 is transmitted, if the UE receives a contention resolution message containing an UL grant for a new transmission on the PDCCH addressed to the C-RNTI, the UE considers the random access procedure successfully completed. If the UE receives an DL assignment on the PDCCH addressed to the temporary C-RNTI and the contention resolution message (i.e. a MAC PDU) addressed by the DL assignment containing a UE Contention Resolution Identity included in a MAC control element matches the CCCH SDU transmitted in the message 3, the UE considers the random access procedure successfully completed. Transmission of the contention resolution message also uses the HARQ procedure. After the random access procedure is successfully completed, the UE flushes the HARQ buffer used for the message 3.

HARQ information, including new data indicator (NDI), transport block (TB) size, HARQ process identifier, etc, is transmitted with an UL grant on the PDCCH. A HARQ entity at the UE maintains a number of parallel HARQ processes allowing transmissions to take place continuously while waiting for the HARQ feedback on successful or unsuccessful receptions of previous transmissions. The HARQ entity carries HARQ information for each HARQ process. When an UL grant is allocated for a current TTI, which may be received dynamically on the PDCCH or in a random access response or may be configured semi-persistently, the HARQ entity identifies a HARQ process where a transmission in this TTI should take place. Whether an adaptive transmission is a new transmission or an adaptive retransmission is recognized by the NDI. In view of the UE, a transmission with the NDI toggled compared to the previous transmission of the same HARQ process is regarded as a new transmission, whereas a transmission with the NDI not toggled is regarded as an adaptive retransmission. After the UE receives a random access response including an UL grant, the UE sets NDI to 0 and considers the NDI toggled. The NDI is shared by all types of C-RNTI, e.g. temporary C-RNTI and C-RNTI. For each HARQ process, the NDI on the eNB and the NDI in the UE have to be synchronized.

There are some problems to the NDI and the random access procedure triggered under the RRC connected mode, described as follows.

This in mind, the present invention aims at providing a method for avoiding false random access procedure completion in a wireless communication system, for avoiding false random access procedure completion due to NDI confusion for a UE in a connected mode of a wireless communication system.

This is achieved by a method for avoiding false random access procedure completion in a wireless communication system according to claims 1-6. The dependent claims pertain to corresponding further developments and improvements.

As will be seen more clearly from the detailed description following below, the claimed method for avoiding false random access procedure completion in a wireless communication system comprises when a random access response is received and the random access response includes an UL grant, selecting a HARQ process for a scheduled message and transmitting the scheduled message according to the UL grant; after the scheduled message is transmitted, when an UL grant associated with the HARQ process is received on a PDCCH addressed to a C-RNTI of the UE and an NDI received on the PDCCH indicates that the UL grant addressed to the C-RNTI is for a new transmission, verifying whether a TB size and a MCS with the UL grant addressed to the C-RNTI are valid; and when the TB size or the MCS with the UL grant addressed to the C-RNTI is invalid, ignoring the UL grant and continuing the random access procedure.

### Brief Description of the Drawings

FIG 1 is a diagram illustrating a contention-based random access procedure according to the prior art.
FIG. 2 is a schematic diagram of an exemplary wireless communication system.
FIG. 3 is a schematic diagram of an exemplary communication device.
FIG. 4 to FIG. 8 are flowcharts of exemplary processes.

FIG 1 is a timing diagram of a contention-based random access procedure triggered under the RRC connected mode according to the prior art. As can be seen in FIG. 1, before the contention-based random access procedure begins, the eNB transmits an UL grant G1 on the PDCCH and the NDI inlcuded in HARQ informaiton has 0 or 1, and the UE perfroms an UL transmission according to the UL grant G1. However, the UE starts a random access procedure for some reason after this UL transmission. The UE transmits a random access preamble to the eNB. After a random access response including an UL grant is receievd, the UE chooses a HARQ process X for transmisison of a message 3, and sets the NDI to the value 0.

The eNB needs time to decode the message 3 after the message 3 is received. There is a period of time from the random access preamble is received to the message 3 is successfully decoded during which the eNB does not identify UE. As shown in FIG. 1, before the message 3 is successfully decoded, the eNB schedules the HARQ process X, which is exactly the HARQ process used for the message 3, and transmits an UL grant G2 on the PDCCH with HARQ informaiton including the NDI set to 0 or 1 to request an UL transmission. That is, the UL transmission assocaited with the UL grant G2 may be a new transmission or an adaptive retransmssion for a previous transport block received before the random access procedure begins. As a result, the UE compares the NDI of 0 with the NDI with the UL grant G2, and may be confused by the NDI.

For the UE side, four issues with respect to NDI confusion may happen. The first issue is false random access procedure completion, happening when the NDI with the UL grant G1 before the random access procedure is set to 0 and the NDI with the UL grant G2 is set to 1. That is, the NDI at the eNB side is toggled for requesting for a new transmission. Since the NDI at the UE side is set to 0 after the random access response is already received, the UE also considers the UL grant G2 is for a new transmission. In other words, the UE considers the random access procedure is successfully completed and thereby flushes the HARQ buffer used for the message 3, which results in that the BSR in the message 3 is lost. The first issue may not cause a serious effect since the received UL grant G2 may be usable for the UE.

The second issue is an error case happening when the NDI with the UL grant G1 is set to 1 and the NDI with the UL grant G2 is set to 0. For the eNB side, the NDI is toggled for requesting for a new transmission. Oppositely, the UE considers the UL grant G2 is for an adaptive retransmission of the message 3. However, the TB size provided in the received HARQ information with the UL grant G2 is different from the transport block size of the message 3, and modulation and coding scheme (MCS) received on the PDCCH is also invalid. Consequently, the UE ignores the UL grant G2 and continues with the transmission of the message 3.

The third issue is also an error case, happening when the NDI with the UL grant G 1 is set to 0 and the NDI with the UL grant G2 is set to 0. That is, the eNB requests for an adaptive retransmission of a previous transport block. However, the UE considers the UL grant G2 is for an adaptive retransmission of the message 3. This UL grant G2 is still useless since the TB size is invalid and MCS is also invalid. Consequently, the UE ignores the UL grant G2 and continues with the transmission of the message 3. Although the abovementioned second or third issues resutls in a wasted grant, the UE can continue with the transmission of the message 3 and have chance to complete the random access procedure successfully.

The fourth issue is false random access procedure completion, happening when the NDI with the UL grant G1 is set to 1 and the NDI with the UL grant G2 is set to 1. The eNB sends the UL grant G2 for requesting an adaptive retransmission of a previous transport block. However, the UE considers the UL grant G2 is for a new transmission and considers the random access procedure is successfully completed, and thereby flushes the HARQ buffer used for the message 3, which results in BSR lost. The fourth issue is harmful because the random access procedure is considered completed without any new UL grant. The consequence of not having any new UL grant for a period of time is that not only the BSR but all messages have no way to be transmitted. For some important message as measurement report, such time delay may cause radio link failure.

As mentioned previously, the random access procedure is triggered when the SR counter reaches a maximum value. If the fourth issue happens to the random access procedure triggered by the SR counter reaching the maximum value, the UE cannot trigger another random access procedure until UL data arrives from higher priority logical channel or the retransmission BSR timer is expired. As a result, the UE may not have a new grant for a long time. The longest delay is the time for the SR counter reaching the maximum value plus the time length of the retransmission BSR timer.

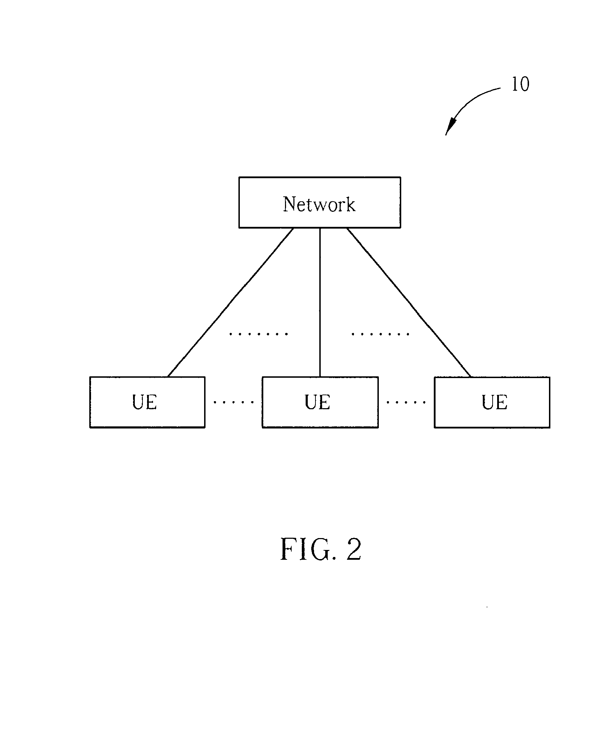

FIG. 2 is a schematic diagram of an examplary wireless communication system 10. Briefly, the wireless communication system 10 is composed of a network and a plurality of mobile devices. The wireless communication system 10 can be an LTE system, LTE-Advanced system or any other similar network system. In the LTE system, the network can be referred as an E-UTRAN comprising a plurality of eNBs, and the mobile devices are referred as UEs. The UEs can be devices such as mobile phones, computer systems, etc. This terminology will be used throughout the application for ease of reference; however, this should not be construed as limiting the disclosure to any one particular type of network. In some examples, the network and the UE may be seen as a transmitter or receiver according to transmission direction, e.g., for UL, the UE is the transmitter and the network is the receiver, and for DL, the network is the transmitter and the UE is the receiver.

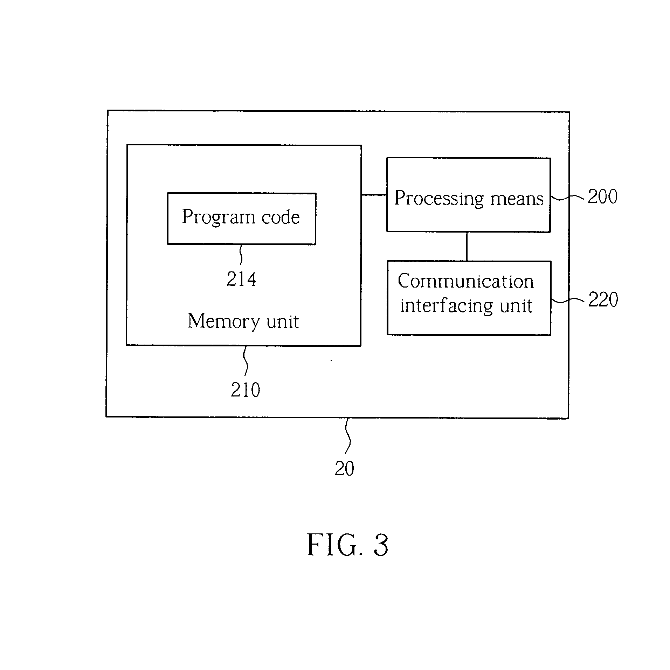

FIG. 3 is a schematic diagram of an exemplary communication device 20. The communication device 20 can be the UE shown in FIG. 2 and may include a processing means 200 such as a microprocessor or ASIC, a memory unit 210, and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, magnetic tapes, floppy disks, and optical data storage devices. The communication interfacing unit 220 is preferably a radio transceiver for wirelessly communicating with the network according to processing results of the processing means 200.

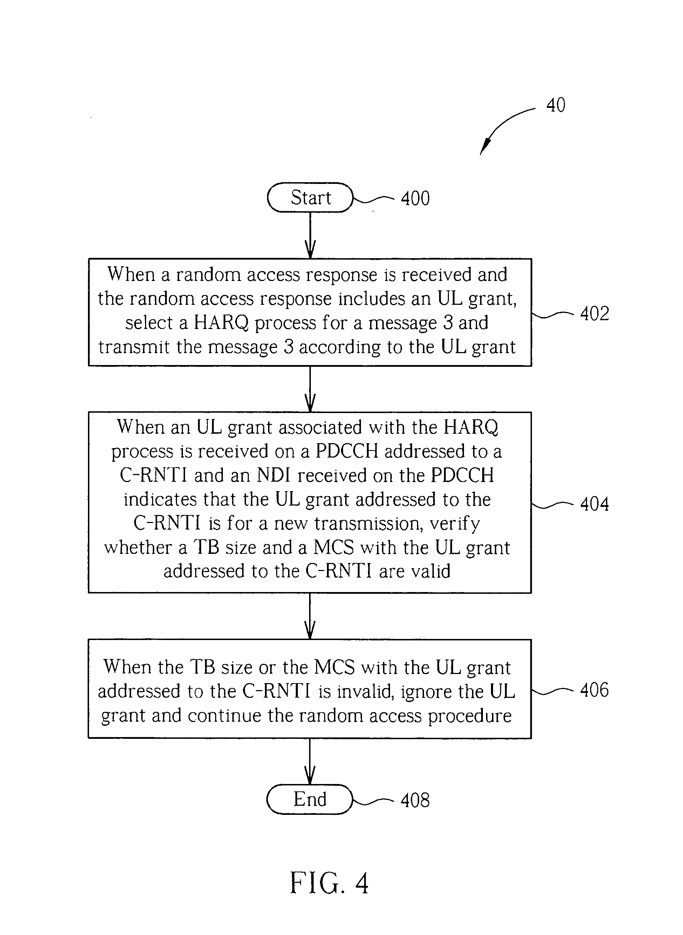

FIG. 4 is a flowchart of an exemplary process 40. The process 40 is utilized for avoiding false random access procedure completion during a random access procedure for a UE in an RRC connected mode of the wireless communication system 10 in FIG. 2. The process 40 can be compiled into the program code 214. The process 40 includes the following steps:
   Step 400: Start.
   Step 402: When a random access response is received and the random access response includes an UL grant, select a HARQ process for a message 3 and transmit the message 3 according to the UL grant.
   Step 404: When an UL grant associated with the hybrid automatic repeat request (HARQ) process is received on a physical downlink control channel (PDCCH) addressed to a cell radio network temporary identifier (C-RNTI) and an NDI received on the PDCCH indicates that the UL grant addressed to the C-RNTI is for a new transmission, verify whether a transport block (TB) size and a modulation and coding scheme (MCS) with the UL grant addressed to the C-RNTI are valid.
   Step 406: When the TB size or the MCS with the UL grant addressed to the C-RNTI is invalid, ignore the UL grant and continue the random access procedure.
   Step 408: End.

In a random access procedure, the UE transmits a random access preamble and waits for receiving a random access response for the eNB. According to Step 402, when the random access response is received by the UE and the random access response includes an UL grant, the UE selects a HARQ process for transmission of the message 3, and transmits the message 3 according to the UL grant included in the random access response.

After the message 3 is transmitted, according to Step 404, when the UE receives an UL grant which is associated with the same HARQ process with the message 3 uses on a PDCCH addressed to the C-RNTI of the UE (called the UL grant addressed to the C-RNTI in short) and the NDI, which is one of HARQ information received on the PDCCH, indicates that the UL grant addressed to the C-RNTI is for a new transmission, the UE verifies whether a TB size and a MCS (which are also received on the PDCCH) are valid for the UE. According to Step 406, when the UE verifies and knows that the TB size or the MCS is invalid, which implies that even though the UL grant addressed to the C-RNTI is not for a new transmission after the message 3 and may be for a new transmission previous to the random access procedure, the UE ignores the UL grant and continues the random access procedure.

As the fourth issue in the prior art, when the eNB transmits an UL grant with an NDI of the value 1 for requesting an adaptive retransmission previous to the random access procedure to the UE before the message 3 is successfully decoded, the UE may take this UL grant for a new transmission according to the NDI of the value 1 and falsely completes the random access procedure with no usable UL grant, which results in the BSR lost. In comparison, according to the process 40, the UE is not confused by the UL grant with the NDI indicating a new transmission but with invalid TB size or invalid MCS, and can have opportunity to successfully complete the random access procedure, which means that the UE can receive an UL grant for a new transmission after the eNB does contention resolution.

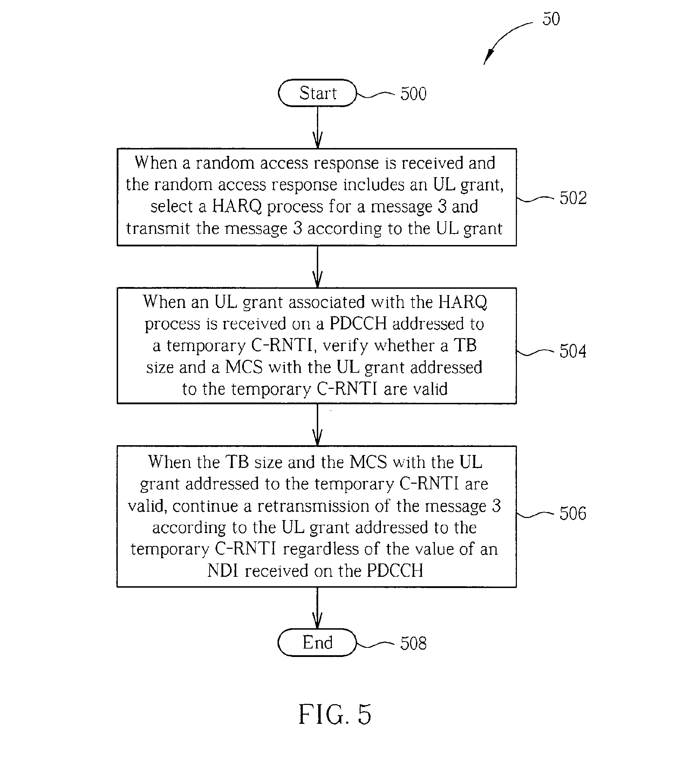

FIG. 5 is a flowchart of an exemplary process 50. The process 50 is utilized for avoiding false random access procedure completion during a random access procedure for a UE in an RRC connected mode of the wireless communication system 10. The process 50 can be compiled into the program code 214. The process 50 includes the following steps:
Step 500: Start.
Step 502: When a random access response is received and the random access response includes an UL grant, select a HARQ process for a message 3 and transmit the message 3 according to the UL grant.
Step 504: When an UL grant associated with the HARQ process is received on a PDCCH addressed to a temporary C-RNTI, verify whether a TB size and a MCS with the UL grant addressed to the temporary C-RNTI are valid.
Step 506: When the TB size and the MCS with the UL grant addressed to the temporary C-RNTI are valid, continue a retransmission of the message 3 according to the UL grant addressed to the temporary C-RNTI regardless of the value of an NDI received on the PDCCH.
Step 508: End.

Step 502 is similar to Step 402 in the process 40, for transmitting a message 3 after a random access response is received. After the message 3 is transmitted, according to Step 504, when the UE receives an UL grant associated with the same HARQ process with the message 3 uses on a PDCCH addressed to a temporary C-RNTI (called the UL grant addressed to the temporary C-RNTI in short), the UE verifies whether a TB size and a MCS are valid for the UE. According to Step 506, when the UE verifies and knows that the TB size and the MCS are valid, which indicates that the UL grant addressed to the temporary C-RNTI can be used by the UE, the UE continues a retransmission of the message 3 according to the UL grant addressed to the temporary C-RNTI, regardless of the value of an NDI received on the PDCCH.

In other words, as long as the TB size and the MCS with the UL grant addressed to the temporary C-RNTI are valid, the UE uses the UL grant addressed to the temporary C-RNTI for an adaptive retransmission of the message 3 whatever the received NDI is of the value 0 or 1 and forces the random access procedure to be successfully completed. Therefore, the false random access procedure completion is avoided.

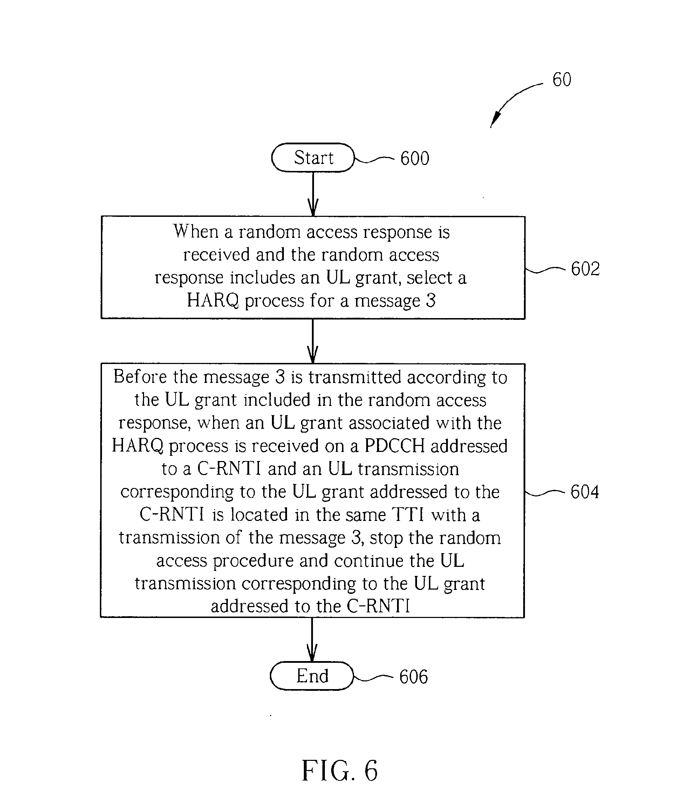

The process 40 and the process 50 are utilized for avoiding false random access procedure completion which may happen after the message 3 is transmitted. Since false random access procedure completion may also happen due to an UL grant arriving after the random access preamble is received and before the message 3 is transmitted, another exemplary process is provided as follows. FIG. 6 is a flowchart of an exemplary process 60. The process 60 is utilized for avoiding false random access procedure completion during a random access procedure for a UE in an RRC connected mode of the wireless communication system 10. The process 60 can be compiled into the program code 214. The process 60 includes the following steps:
Step 600: Start.
Step 602: When a random access response is received and the random access response includes an UL grant, select a HARQ process for a message 3.
Step 604: Before the message 3 is transmitted according to the UL grant included in the random access response, when an UL grant associated with the HARQ process is received on a PDCCH addressed to a C-RNTI of the UE and an UL transmission corresponding to the UL grant addressed to the C-RNTI is located in the same transmission time interval (TTI) with a transmission of the message 3, stop the random access procedure and continue the UL transmission corresponding to the UL grant addressed to the C-RNTI.
Step 606: End.

According to Step 602, when a random access response is received and the random access response includes an UL grant, the UE selects a HARQ process for a transmission of a message 3. According to Step 604, before the message 3 is transmitted, when the UE receives an UL grant associated with the same HARQ process with the message 3 uses on a PDCCH addressed to a C-RNTI (called the UL grant addressed to the C-RNTI in short) and an UL transmission corresponding to the UL grant addressed to the C-RNTI is located in the same TTI with a transmission of the message 3 is located, the UE stops the random access procedure, which indicates that the NDI in the UE is not set to the value 0 after the random access response is received and is still synchronized with the NDI in the eNB, and the UE continues the UL transmission corresponding to the UL grant addressed to the C-RNTI. The UE may use the UL grant addressed to the C-RNTI to perform a new transmission or an adaptive retransmission previous to the random access procedure, which depends on the value of the NDI received with the UL grant addressed to the C-RNTI. Since the UE using the process 60 stops the random access procedure before the message 3 is transmitted, false random access procedure completion is thereby avoided.

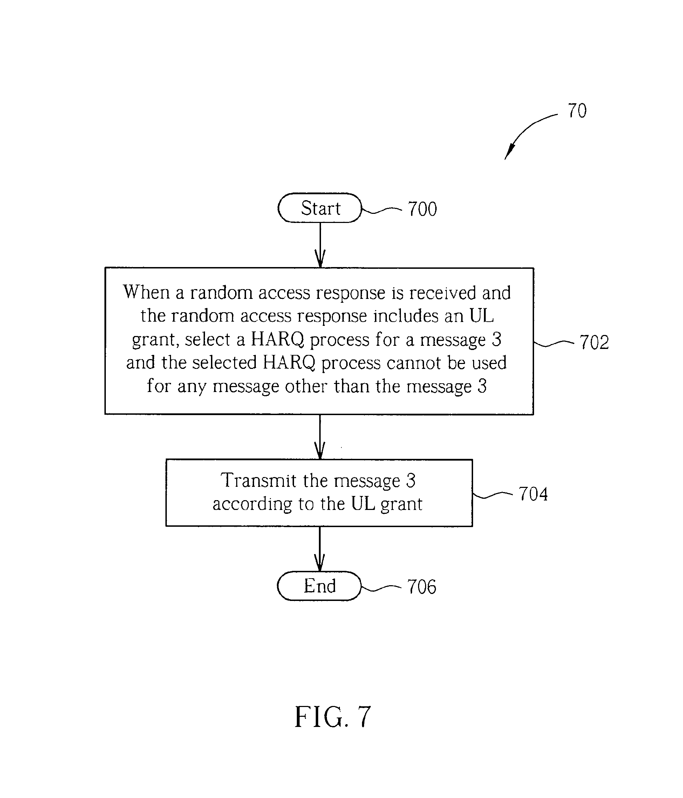

FIG. 7 is a flowchart of an exemplary process 70. The process 70 is utilized for avoiding false random access procedure completion during a random access procedure for a UE in an RRC connected mode of the wireless communication system 10. The process 70 can be compiled into the program code 214. The process 70 includes the following steps:
Step 700: Start.
Step 702: When a random access response is received and the random access response includes an UL grant, select a HARQ process for a message 3 and the selected HARQ process cannot be used for any message other than the message 3.
Step 704: Transmit the message 3 according to the UL grant.
Step 706: End.

According to Step 702, when the UE receives a random access response and the random access response includes an UL grant, the UE selects a HARQ process for a message 3, which is a process dedicated to the message 3 and cannot be used for any message except the message 3, and the UE transmits the message 3 according to the UL grant included in the random access response. The concept of the process 70 is to allocate a dedicated HARQ process to the transmission of the message 3. Since it is already known from the current 3GPP specification that whether an NDI is toggled is considered by each HARQ process, the UE using the process 70 is not confused by the value of the NDI and does not falsely complete the random access procedure.

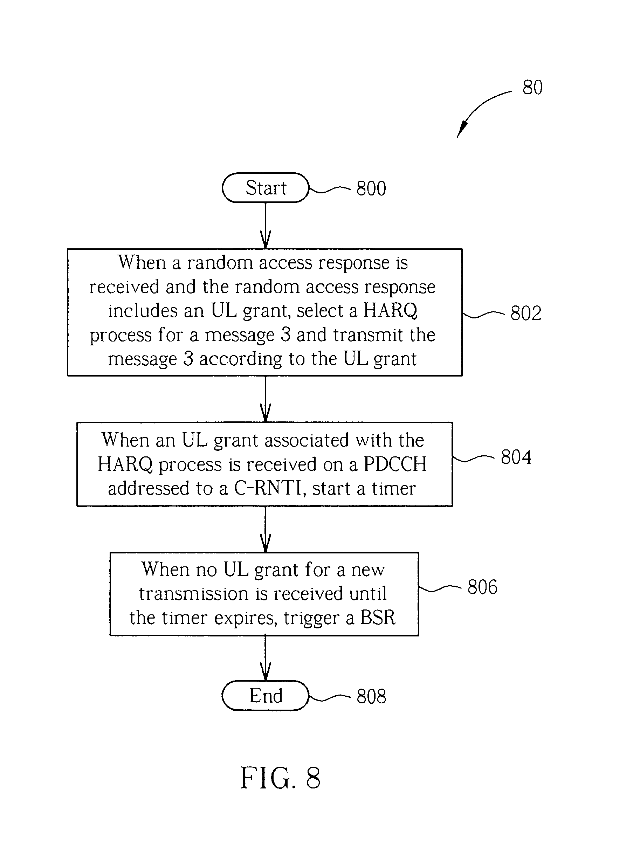

The processes 40, 50, 60, and 70 aim to avoid false random access procedure completion, so that the problem of BSR lost does not happen and thereby the UE has opportunity to obtain an UL grant for a new transmission, to transmit data stalled in the UL transmission buffer. In addition, another exemplary process is provided for solving the problem of BSR lost due to false random access procedure completion. FIG. 8 is a flowchart of an exemplary process 80. The process 80 is utilized for improving a random access procedure for a UE in an RRC connected mode of the wireless communication system 10. The process 80 can be compiled into the program code 214. The process 80 includes the following steps:
Step 800: Start.
Step 802: When a random access response is received and the random access response includes an UL grant, select a HARQ process for a message 3 and transmit the message 3 according to the UL grant.
Step 804: When an UL grant associated with the HARQ process is received on a PDCCH addressed to a C-RNTI of the UE, start a timer.
Step 806: When no UL grant for a new transmission is received until the timer expires, trigger a BSR.
Step 808: End.

When the UE receives a random access response, the UE selects a HARQ process for a message 3 and then transmits the message 3 according to an UL grant included in the random access response. Note that, after the message 3 is transmitted, when the UE receives an UL grant associated with the same HARQ process with the message 3 uses on a PDCCH addressed to a C-RNTI of the UE, the UE may consider the random access procedure is successfully completed but actually it is falsely completed. In this situation, the UE flushes the HARQ buffer used for the message 3 and the BSR is lost.

After the message 3 is transmitted, according to Step 804, when the UE receives the UL grant associated with the HARQ process on the PDCCH addressed to the C-RNTI, the UE starts a timer, which is utilized for making up for the BSR lost. Before the timer does not expire yet, the UE keeps monitoring the PDCCH in order to receive any other UL grant for a new transmission. According to Step 806, when the UE receives no UL grant for a new transmission until the timer expires, the UE triggers a BSR, which is a regular BSR. The reason why the UE triggers this regular BSR is that when a regular BSR is triggered when there is no UL-SCH resource allocated for the current TTI, a scheduling request (SR) is triggered for requesting an UL grant for a new transmission. In other words, the UE has opportunity to obtain an UL grant for a new transmission by the triggered BSR.

In the process 80, the timer is used for the UE to wait for the UL grant for a new transmission, and the time length of the timer can be set depending on requirements. When the timer is set to zero, the UE does not wait and immediately triggers the BSR when the UE receives the UL grant associated with the same HARQ process with the message 3 uses on the PDCCH addressed to the C-RNTI. In other words, the timer set to 0 brings a result as no timer. Through the process 80, the result of receiving no UL grant due to BSR lost is solved.

Please note that the abovementioned steps of the process 40, 50, 60, 70, or 80 including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In summary, according to the above exemplary processes and communication device, a UE in the RRC connected mode avoids false random access procedure completion through different ways including ignoring unusable UL grant, forcing the random access procedure to be completed regardless of NDI, or allocating dedicated HARQ process to the message 3, such that the UE has opportunity to receive an UL grant for a new transmission after the random access procedure is indeed completed successfully. Otherwise, the UE can stop the random access procedure and perform NDI synchronization with the eNB when receiving an UL grant corresponding to a transmission previous to the random access procedure. The UE in the RRC connected mode can also trigger a BSR after false random access procedure completion happens, for requesting an UL grant for a new transmission. Therefore, the problem of BSR lost and lack of UL grant due to false random access procedure completion is resolved.

## Claims

1. A method of avoiding false random access procedure completion during a random access procedure for a user equipment in a connected mode of a wireless communication system, the method comprising:
when a random access response is received and the random access response includes an uplink grant, selecting a hybrid automatic repeat request process for a scheduled message and transmitting the scheduled message according to the uplink grant (402);
**characterized by** after the scheduled message is transmitted, when an uplink grant associated with the hybrid automatic repeat request process is received on a physical downlink control channel addressed to a cell radio network temporary identifier of the user equipment and a new data indicator received on the physical downlink control channel indicates that the uplink grant addressed to the cell radio network temporary identifier is for a new transmission, verifying whether a transport block size and a modulation and coding scheme with the uplink grant addressed to the cell radio network temporary identifier are valid (404); and
when the transport block size or the modulation and coding scheme with the uplink grant addressed to the cell radio network temporary identifier is invalid, ignoring the uplink grant and continuing the random access procedure (406).

2. A method of avoiding false random access procedure completion during a random access procedure for a user equipment in a connected mode of a wireless communication system, the method comprising:
when a random access response is received and the random access response includes an uplink grant, selecting a hybrid automatic repeat request process for a scheduled message and transmitting the scheduled message according to the uplink grant (502);
**characterized by** after the scheduled message is transmitted, when an uplink grant associated with the hybrid automatic repeat request process is received on a physical downlink control channel addressed to a temporary cell radio network temporary identifier, verifying whether a transport block size and a modulation and coding scheme with the uplink grant addressed to the temporary cell radio network temporary identifier are valid (504); and
when the transport block size and the modulation and coding scheme with the uplink grant addressed to the temporary cell radio network temporary identifier are valid, continuing a retransmission of the scheduled message according to the uplink grant addressed to the temporary cell radio network temporary identifier regardless of the value of a new data indicator received on the physical downlink control channel (506).

3. A method of avoiding false random access procedure completion during a random access procedure for a user equipment in a connected mode of a wireless communication system, the method comprising:
when a random access response is received and the random access response includes an uplink grant, selecting a hybrid automatic repeat request process for a scheduled message (602);
**characterized by** before the scheduled message is transmitted according to the uplink grant included in the random access response, when an uplink grant associated with the hybrid automatic repeat request process is received on a physical downlink control channel addressed to a cell radio network identifier of the user equipment and an uplink transmission corresponding to the uplink grant addressed to the cell radio network identifier is located in the same transmission time interval with a transmission of the scheduled message, stopping the random access procedure and continuing the uplink transmission corresponding to the uplink grant addressed to the cell radio network identifier (604).

4. A method of avoiding false random access procedure completion during a random access procedure for a user equipment in a connected mode of a wireless communication system, the method comprising:
transmitting a scheduled message according to an uplink grant (704);
**characterized by** before transmitting the scheduled message according to the uplink grant (704), when a random access response is received and the random access response includes the uplink grant, selecting a hybrid automatic repeat request process for the scheduled message, wherein the selected hybrid automatic repeat request process cannot be used for any message other than the scheduled message (702).

5. A method of improving a random access procedure for a user equipment in a connected mode of a wireless communication system, the method comprising:
when a random access response is received and the random access response includes an uplink grant, selecting a hybrid automatic repeat request process for a scheduled message and transmitting the scheduled message according to the uplink grant (802);
**characterized by** after the scheduled message is transmitted, when an uplink grant associated with the hybrid automatic repeat request process is received on a physical downlink control channel addressed to a cell radio network identifier of the user equipment, starting a timer (804); and
when no uplink grant for a new transmission is received until the timer expires, triggering a buffer status report (806).

6. The method of claim 5, **characterized in that** the user equipment immediately triggers the buffer status report after the user equipment receives the uplink grant addressed to the cell radio network identifier when the timer is set to zero.
